# EUROPÄISCHE PATENTSCHRIFT

(11) **EP 2 101 943 B1**
(45) Veröffentlichungstag und Bekanntmachung des Hinweises auf die Patenterteilung: **11.08.2010**
(21) Anmeldenummer: 07818867.9
(22) Anmeldetag: 10.10.2007
(51) Int. Cl.: B23B 27/04, B23B 29/04

(54) **WERKZEUGHALTER, INSBESONDERE FÜR EIN STECHWERKZEUG SOWIE SCHNEIDKÖRPER FÜR EINEN WERKZEUGHALTER**
TOOL HOLDER, PARTICULARLY FOR A BURRING TOOL, AND CUTTING ELEMENT FOR A TOOL HOLDER
PORTE-OUTIL, NOTAMMENT POUR UN OUTIL DE TRONÇONNAGE, ET ÉLÉMENT COUPANT POUR UN PORTE-OUTIL

(30) Priorität: 18.12.2006 DE 102006059717
(43) Veröffentlichungstag der Anmeldung: 23.09.2009
(73) Patentinhaber: Kennametal Inc., Latrobe, PA 15650-0231 (US)
(72) Erfinder: KAUFMANN, Igor, 90469 Nürnberg (DE)
(74) Vertreter: Tergau & Pohl Patentanwälte
(86) Internationale Anmeldenummer: PCT/EP2007/008794
(87) Internationale Veröffentlichungsnummer: WO 2008/074374

(56) Entgegenhaltungen:
- EP-A- 1 252 954
- EP-A- 1 533 056
- DE-C1- 10 132 721
- DE-U1- 8 804 365
- FR-A- 2 373 349

## Beschreibung

Die Erfindung betrifft einen Werkzeughalter, insbesondere für ein Stechwerkzeug, gemäß dem Oberbegriff des Anspruchs 1.

Ein derartiger Werkzeughalter ist beispielsweise aus der DE 101 32 721 C1 zu entnehmen. Derartige Werkzeughalter werden insbesondere zum Stech- und Längsdrehen sowie für Abstech- und Abtrennvorgänge an einem rotierenden Werkstück eingesetzt. Üblicherweise durchläuft das zu bearbeitende Werkstück mehrere Bearbeitungsstufen. In jeder Bearbeitungsstufe wird das Werkstück mit einem anderen Werkzeug bearbeitet. Hierzu werden oftmals mehrere, auch unterschiedliche Werkzeughalter, die mit unterschiedlichen Werkzeugen bestückt sind, in einer Maschinenhalterung, beispielsweise eine Kassette, aneinander gereiht angeordnet. Das während der Bearbeitung rotierende Werkstück wird dann zur spanenden Behandlung abwechselnd in Kontakt mit den unterschiedlichen Werkzeugen gebracht.

Aufgrund der spanenden Bearbeitung unterliegen die Schneidkörper einem Verschleiß und müssen daher von Zeit zu Zeit ausgetauscht werden. Um die Stillstandszeiten bei der Werkstückbearbeitung möglichst gering zu halten, wird ein möglichst einfacher Austausch der einzelnen Werkzeuge angestrebt. Gleichzeitig müssen die einzelnen Werkzeuge, insbesondere Schneidkörper, im Werkzeughalter in einer exakten und definierten Position zuverlässig und spielfrei gehalten werden, um die gewünschte, hochgenaue spanende Bearbeitung zu ermöglichen.

Der Erfindung liegt die Aufgabe zugrunde, einen einfachen Austausch eines Schneidkörpers zu ermöglichen. Ein hierfür angepasster optionaler Schneidkörper kann vorgesehen sein.

Die Aufgabe wird gemäß der Erfindung gelöst durch einen Werkzeughalter mit den Merkmalen des Patentanspruchs 1. Dieser weist einen üblicherweise quaderförmigen Grundkörper auf, der sich entlang einer Halterlängsachse in x-Richtung erstreckt. Der Grundkörper weist eine sich in y-Richtung erstreckende Breite sowie eine sich in z-Richtung erstreckende Höhe auf. An seinem vorderen Stirnende umfasst der Werkzeughalter einen Klemmkopf zur Aufnahme eines Schneidkörpers. Der Klemmkopf weist eine Schneidkörperaufnahme auf, die nach oben von einer Klemmpratze und nach unten von einer unteren Auflagefläche begrenzt wird. Zwischen Klemmpratze und Auflagefläche wird der Schneidkörper eingeklemmt. Hierzu ist ein zwischen der Klemmpratze und der Auflagefläche verlaufender Trennschlitz vorgesehen, so dass die Klemmpratze am Grundkörper elastisch gehalten ist. Zum Verspannen des Schneidkörpers in der Schneidkörperaufnahme ist ein Spannelement vorgesehen, mit dessen Hilfe die Klemmpratze auf die untere Auflagefläche verspannbar ist. Das Spannelement erstreckt sich über den Trennschlitz und ist in einem Widerlager im Grundkörper gehalten, so dass beim Verspannen das Spannelement die Klemmpratze unmittelbar gegen die Auflagefläche drückt. Um nunmehr für den Austausch des Schneidkörpers eine einfache und problemlose Zugänglichkeit zu ermöglichen, schließt eine Mittenachse des Spannelements zur Halterlängsachse einen Spannwinkel < 45° und insbesondere < 30° ein. Die Mittenachse des Spannelements ist also innerhalb der x-z-Ebene gegen die Halterlängsachse und damit gegen die x-Richtung um den Spannwinkel geneigt, so dass insgesamt die Kopffläche eines Kopfes des Spannelements sehr steil und damit gut zugänglich gegenüber der Halterlängsachse orientiert ist. Durch die sehr gute und stirnseitige Zugänglichkeit ist ein Wechsel des Schneidkörpers problemlos möglich, selbst wenn der Werkzeughalter mit mehreren weiteren Werkzeughaltern gemeinsam und auf engem Raum in einer Maschinenhalterung eingespannt ist. Versuche haben ergeben, dass aufgrund des geringen Spannwinkels eine sehr gute Zugänglichkeit gegeben ist und gleichzeitig- trotz des geringen Spannwinkels - mit Hilfe des Spannelements eine ausreichende Klemmkraft in Normalrichtung, d.h. im Wesentlichen in z-Richtung, erreichbar ist, so dass ein sicherer und zuverlässiger Sitz des Schneidkörpers in der Schneidkörperaufnahme gewährleistet ist. Um eine ausreichende Klemmkraft sicherzustellen ist der Spannwinkel vorzugsweise größer 10° und insbesondere größer 20°- 25°.

Gemäß einer zweckdienlichen Weiterbildung weist die Klemmpratze eine Senkaufnahme zur Aufnahme des Kopfes des Spannelements auf, wobei sich die Senkaufnahme entlang einer Mittenlinie erstreckt. Diese Mittenlinie ist gegenüber der Mittenachse des Spannelements versetzt angeordnet, und zwar nach oben versetzt. D.h. die Mittenachse und die Mittenlinie weisen innerhalb der x-z-Ebene einen Versatz auf. Durch diese Maßnahme wird beim Anziehen des Spannelements eine zusätzliche Kraftkomponente in Klemmrichtung, d.h. im Wesentlichen in z-Richtung, ausgeübt. Hierdurch wird eine Erhöhung der Klemmkraft erreicht. Der Versatz liegt hier vorzugsweise im Bereich zwischen 0,2 und 0,3 mm.

Um eine einfache Herstellung des Werkzeughalters zu ermöglichen, ist eine neben der Schneidkörperaufnahme verlaufende Stirnfläche des Grundkörpers vorzugsweise durch maximal zwei ebene Stimflächenabschnitte gebildet. In einer Ausführungsvariante ist die Stirnfläche durch einen einzigen Stimflächenabschnitt gebildet, welcher insbesondere senkrecht zur Mittenachse des Spannelements orientiert ist.

Wird die Stirnfläche durch zwei Stimflächenabschnitte gebildet, so ist vorzugsweise der obere Stirnflächenabschnitt, welcher den Kopf des Spannelements aufnimmt, senkrecht zur Mittenachse des Spannelements orientiert. Der sich hieran nach unten hin anschließende zweite Stirnflächenabschnitt ist vorzugsweise senkrecht zur Halterlängsachse ausgerichtet. Durch die Orientierung senkrecht zur Halterlängsachse ist ein größerer Freiraum für die Spanabfuhr gegeben. Doch auch bereits bei der Ausbildung der Stirnfläche mit nur einem geneigten Stimflächenabschnitt ist ein ausreichender Freiraum für das zu bearbeitende Werkstück aufgrund der vergleichsweise steilen Ausrichtung erreicht.

Durch die Ausgestaltung der Stimflächenabschnitte als ebene, krümmungsfreie Fläche kann die Stirnfläche beim Herstellen des Werkzeughalters durch einfachste Bearbeitungsvorgänge, wie beispielsweise Fräsen, erzeugt werden.

Zum Verspannen der Klemmpratze gegenüber der Auflagefläche ist der Trennschlitz vorgesehen, der die Klemmpratze vom restlichen Grundkörper bis auf einen Biegequerschnitt trennt. Bevorzugt ist lediglich ein einziger Trennschlitz vorgesehen. Der zumindest eine Stimflächenabschnitt erstreckt sich vorzugsweise bis zu diesem Trennschlitz kantenfrei. Dieser Stimflächenabschnitt lässt sich also insbesondere durch einen einfachen Fräsvorgang erzeugen. Aufgrund des geringen Spannwinkels ist hier keine gekrümmte Fläche erforderlich, um einen ausreichenden Freiraum für die Werkstückbearbeitung zu ermöglichen.

Gemäß einer bevorzugten Weiterbildung endet der Trennschlitz innerhalb des Klemmkopfes, d.h. der Biegequerschnitt liegt im Klemmkopf. Die Erstreckung des Klemmkopfes in Richtung der Halterlängsachse ist hierbei bestimmt durch einen Kopfbereich, der gegenüber einer oberen Schaftfläche des Grundkörpers erhöht ist. Da als Spannelement üblicherweise eine Spannschraube eingesetzt wird und daher zum Aufbringen der notwendigen Spannkraft ein Gewinde im Grundkörper erforderlich ist, das auf der der Klemmpratze abgewandten Seite des Trennschlitzes angeordnet ist, ist durch diese Ausbildung eine möglichst große Gewindelänge ermöglicht. Durch die Anordnung des Trennschlitzes im Klemmkopfbereich bleibt daher noch eine vergleichsweise große Gewindelänge, so dass eine möglichst große Kraftübertragungsstrecke erreicht ist. Das Gewinde bildet daher das Widerlager für das Spannelement im Grundkörper.

Vorzugsweise erstreckt sich die Schneidkörperaufnahme über den Kopfbereich hinaus. Hierdurch wird die Ausbildung eines möglichst kurzen Kopfbereichs ermöglicht. Dieser möglichst kurze Kopfbereich ist von besonderem Vorteil bei einer Mehrfachanordnung mehrerer Werkzeughalter, beispielsweise in einer Kassette bei Langdrehautomaten. Die Werkzeughalter sind hierin nebeneinander, beispielsweise vertikal übereinander, angeordnet. Der hier beschriebene Werkzeughalter ist insbesondere zur Aufnahme einer Schneidplatte zur Ausbildung eines Abstechwerkzeugs vorgesehen. Derartige Abstechwerkzeuge sind üblicherweise bei der Mehrfachanordnung von unterschiedlichen Werkzeugen diejenigen, die die größte Länge, die sogenannte Auskraglänge, aufweisen. Da die einzelnen Schneiden aller Werkzeuge auf eine gemeinsame Ebene eingestellt werden müssen, ist damit das Abstechwerkzeug der limitierende Faktor. Insofern ist es daher von Vorteil, wenn der Kopfbereich des Werkzeughalters möglichst klein gehalten werden kann, so dass der Werkzeughalter in der Kassette möglichst weit nach hinten verschoben werden kann.

Um eine möglichst große Gewindelänge für die Spannschraube zu erhalten, endet der Trennschlitz vorzugsweise innerhalb des erhöhten Kopfbereiches.

Um die kompakte Ausgestaltung zu ermöglichen, ist weiterhin vorgesehen, dass der Trennschlitz in etwa s-förmig verläuft und in seinem Mittenabschnitt etwa senkrecht zur Mittenachse des Spannelements orientiert ist. Dabei ist insbesondere vorgesehen, dass der Mittenabschnitt bezogen auf die Halterlängsachse im vorderen Bereich, also etwa in oder vor der Mitte des Klemmkopfes angeordnet ist. Der Trennschlitz ist daher sehr nahe an der Stirnfläche des Grundkörpers angeordnet, so dass insgesamt eine lange Kraftübertragungsstrecke für das Spannelement verbleibt.

Gemäß einer bevorzugten Ausgestaltung erstreckt sich die Schneidkörperaufnahme entlang einer Längsachse, die in Bezug auf die x-z-Ebene gegenüber der Halterlängsachse um einen Nebenfreiwinkel geneigt ist. D.h. die Längsachse ist bezüglich der sich in Richtung der Halterlängsachse erstreckenden Vertikalebene unter dem Nebenfreiwinkel angeordnet. Dieser liegt vorzugsweise in einem Bereich unterhalb von 2° und insbesondere im Bereich von 1 ° und 1,5°. Da die Seitenflächen des quaderförmigen Grundkörpers parallel zur Halterlängsachse verlaufen ist die Schneidkörperaufnahme unter dem Nebenfreiwinkel zu der einen Seitenfläche des Grundkörpers orientiert. Diese Seitenfläche definiert üblicherweise auch eine exakt über die Maschinensteuerung vorgebbare Null-Position bezüglich der y-Richtung.

Zweckdienlicherweise umfasst die Schneidkörperaufnahme in Richtung der Halterlängsachse gesehen eine rückwärtige Anschlagfläche, an der sich der Schneidkörper in der montierten Position abstützt. Diese rückwärtige Anschlagfläche ist hierbei unter einem senkrechten Winkel zur Halterlängsachse orientiert. Dies bedeutet, dass die Anschlagfläche zusätzlich um den Betrag des Nebenfreiwinkels gegenüber der Längsachse der Schneidkörperaufnahme geneigt ist. Insgesamt ist daher die Anschlagfläche etwas geneigt und nicht rechtwinklig zu der Längsachse der Schneidkörperaufnahme ausgerichtet. Korrespondierend hierzu ist eine Stirnseite des Schneidkörpers ebenfalls um einen den Betrag des Nebenfreiwinkels entsprechenden Winkel bezüglich einer Plattenkörperlängsachse geneigt, und zwar derart, dass eine flächigen Anlage der Stirnseite des Schneidkörpers an der Anschlagfläche erreicht ist.

Zweckdienlicherweise fluchtet bei eingesetztem Schneidkörper ein Schneideck des Schneidkörpers mit dieser Seitenfläche des Grundkörpers. Durch diese Maßnahme liegt das Schneideck daher in der durch die Maschinenhalterung vorgegebene Null-Position, so dass die Ansteuerung einfach gehalten ist und keine Umrechnung erforderlich ist. Diese exakte Ausrichtung des Schneidecks innerhalb der Ebene, durch die die definierte Null-Lage gebildet ist, wird insbesondere dadurch ermöglicht, dass an den Grundkörper, insbesondere an dessen Seitenabmaße, sehr hohe Toleranzanforderungen gestellt und erfüllt werden.

In einer Weiterbildung ist vorzugsweise zusätzlich zu der Neigung um den Nebenfreiwinkel in Bezug auf die x-z-Ebene die Schneidkörperaufnahme auch in Bezug auf die x-y-Ebene gegenüber der Halterlängsachse um einen Neigungswinkel geneigt angeordnet. D.h. die Schneidkörperaufnahme ist gegenüber der Horizontalebene um den Neigungswinkel geneigt. Dieser liegt im Bereich von wenigen Grad, beispielsweise im Bereich von 3 bis 10°, insbesondere im Bereich von etwa 5°. Durch den Neigungswinkel verläuft die Schneidkörperaufnahme schräg in den Grundkörper hinein, wodurch im hinteren Bereich die Schneidkörperaufnahme tiefer innerhalb des Grundkörpers angeordnet ist. Durch diese Maßnahme wird letztendlich die Ausbildung eines möglichst kurzen Klemmkopfs unterstützt, da die Schneidkörperaufnahme problemlos sich über den Klemmkopf hinaus erstrecken kann.

Der Schneidkörper erstreckt sich entlang einer Plattenlängsachse und weist einen plattenförmigen Schneidbereich mit einer stirnseitigen Schneide auf. Der Schneidbereich verbreitert sich in bevorzugter Ausgestaltung in Richtung der Plattenlängsachse von einer Schmalstelle zur Schneide hin. Die beiden gegenüberliegenden Seitenflächen des plattenförmigen Schneidbereichs laufen daher in Richtung zur Schneide hin auseinander, so dass sich der

Schneidbereich zur Schneide hin verbreitert. Hierdurch wird unmittelbar am Schneidkörper selbst ein Plattennebenfreiwinkel ausgebildet. Dieser wirkt zusätzlich zu dem Nebenfreiwinkel, wie er durch die geneigte Anordnung der Schneidkörperaufnahme gebildet ist.

Zweckdienlicherweise ist der Schneidkörper bezüglich einer Mittenrotationsachse um 180° rotationssymmetrisch ausgebildet. Der Schneidkörper ist daher als zweiseitige Wendeschneidplatte ausgebildet.

Vorzugsweise umfasst die Wendeschneidplatte hierbei einen verdickten Mittenbereich. An jeder Seite des verdickten Mittenbereichs schließt sich jeweils ein plattenförmiger Schneidbereich an. Diese beiden plattenförmigen Schneidbereiche sind dabei versetzt und etwa diagonal gegenüberliegend angeordnet. Die Außenseiten der plattenförmigen Schneidbereiche fluchten hierbei zumindest weitgehend mit einer Außenseite des Mittenbereichs.

In einer bevorzugten Ausgestaltung weist der Schneidbereich ein äußeres Schneideck auf, welches fluchtend, also auf einer Linie mit einer Außenkante des Mittenbereichs ausgerichtet ist. An den Mittenbereich schließt sich daher eine äußere Seitenfläche des Schneidbereichs an. An der vorderen Stirnseite des Schneidbereichs ist am oberen Eck der äußeren Seitenfläche das Schneideck gebildet.

Von besonderem Vorteil ist nunmehr, dass mit der selben Schneidkörperaufnahme des Werkzeughalters problemlos unterschiedliche Stechbreiten möglich sind. Die Stechbreite wird hierbei definiert durch die Länge der Schneide ausgehend vom Schneideck. Aufgrund des verdickten Mittenbereichs besteht hier die Möglichkeit, bei dem Schneidkörper die Stechbreite variabel einzustellen. Die Stechbreite kann hierbei ausgehend vom Schneideck sich bis zu einer maximalen Stechbreite erstrecken, die der Dicke des Mittenbereichs entspricht.

An der gegenüberliegenden Seite ist demgegenüber im Übergangsbereich zwischen dem plattenförmigen Schneidbereich und dem verdickten Mittenbereich eine nach Art eines Absatzes wirkende Stirnwand gebildet. Diese Stirnwand ist vorzugsweise gegenüber der Plattenlängsachse geneigt angeordnet. Der Neigungswinkel ist hierbei derart gewählt, dass die Stirnwand im eingebauten Zustand parallel und vorzugsweise fluchtend zum Stimflächenabschnitt im Bereich des Kopfes des Spannelements verläuft. Die Stirnwand bildet daher im eingebauten Zustand vorzugsweise eine Fortsetzung dieses Stimflächenabschnitts. Die Flächennormale der Stirnwand ist daher gegenüber der Plattenlängsachse in einem Bereich < 45° und insbesondere < 30° geneigt. Beträgt der Spannwinkel beispielsweise 25° und ist zugleich die gesamte Schneidkörperaufnahme gegenüber der Horizontalebene um einen Neigungswinkel von 5° geneigt, so beträgt der Winkel zwischen der Stirnwand und der Plattenlängsachse 20°.

Ausführungsbeispiele der Erfindung werden im Folgenden anhand der Figuren näher erläutert. Es zeigen jeweils in schematischen Darstellungen:
- Fig. 1: eine ausschnittsweise Seitenansicht eines Werkzeughalters im Bereich des Klemmkopfes mit eingespanntem Schneidkörper,
- Fig. 2: eine ausschnittsweise perspektivische Darstellung im Bereich des Klemmkopfes ohne Schneidkörper,
- Fig. 3A,B: eine Seitenansicht bzw. Draufsicht auf einen Werkzeughalter mit einge- setztem Schneid körper,
- Fig. 4: eine Schnittansicht entlang der Schnittlinie E-E gemäß Fig. 3A im vorde- ren Bereich des Werkzeughalters,
- Fig. 5: eine perspektivische Darstellung des Werkzeughalters im Bereich des Klemmkopfes,
- Fig. 6: eine perspektivische Darstellung einer alternativen Ausgestaltung im Be- reich des Klemmkopfes,
- Fig. 7A,B: zwei perspektivische Darstellungen einer weiteren Ausführungsvariante im Bereich des Klemmkopfes,
- Fig. 8A: eine perspektivische Darstellung eines Schneidkörpers mit Blickrichtung auf die Unterseite, und
- Fig. 8B: eine perspektivische Darstellung des in Fig. 8A gezeigten Schneidkörpers mit Blickrichtung auf die Oberseite des Schneidkörpers.

In den Figuren sind gleich wirkende Teile mit den gleichen Bezugszeichen versehen.

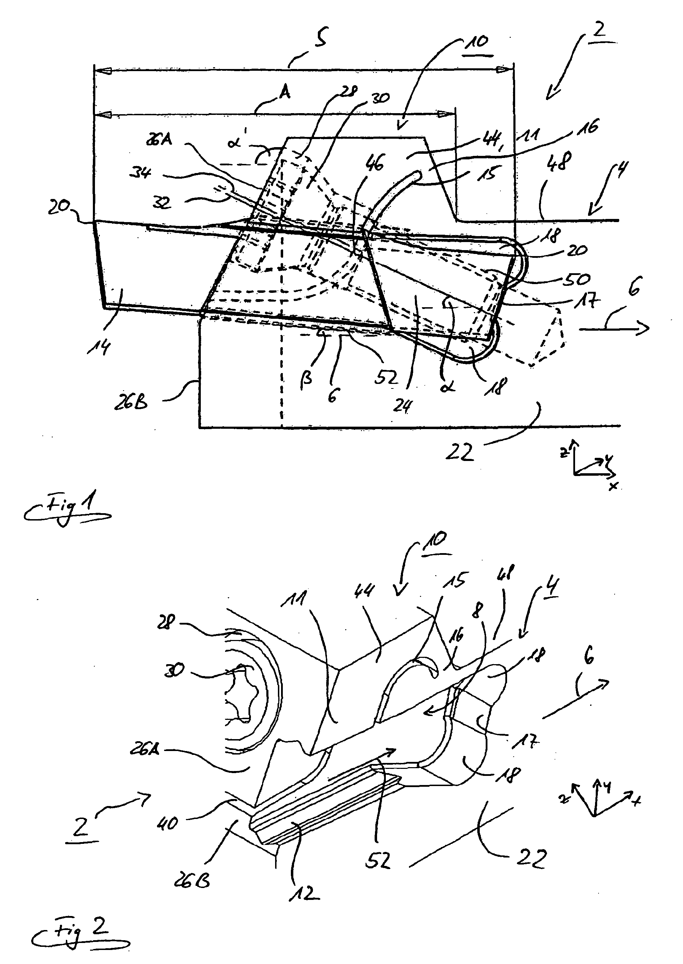

Der Werkzeughalter 2 gemäß Fig. 1 umfasst einen Grundkörper 4, der sich in Richtung seiner Halterlängsachse 6 erstreckt. Die Halterlängsachse 6 bildet zugleich die x-Richtung eines kartesischen Koordinatensystems. Der Grundkörper 4 erstreckt sich in seiner Höhe in z-Richtung dieses karthesischen Koordinatensystems. Seine Breite erstreckt sich in x-Richtung des kartesischen Koordinatensystems. In seinem vorderen Stirnbereich weist der Grundkörper 4 einen Klemmkopf 10 mit einer Schneidkörperaufnahme 8 auf (vgl. hierzu insbesondere Fig. 2). Diese ist nach oben im Wesentlichen durch eine Klemmpratze 11 und nach unten durch eine untere Auflagefläche 12 begrenzt. Die untere Auflagefläche 12 sowie die Unterseite der Klemmpratze 11 weisen eine eine Führung bildende dachförmige Vertiefung für einen Schneidkörper 14 (vgl.

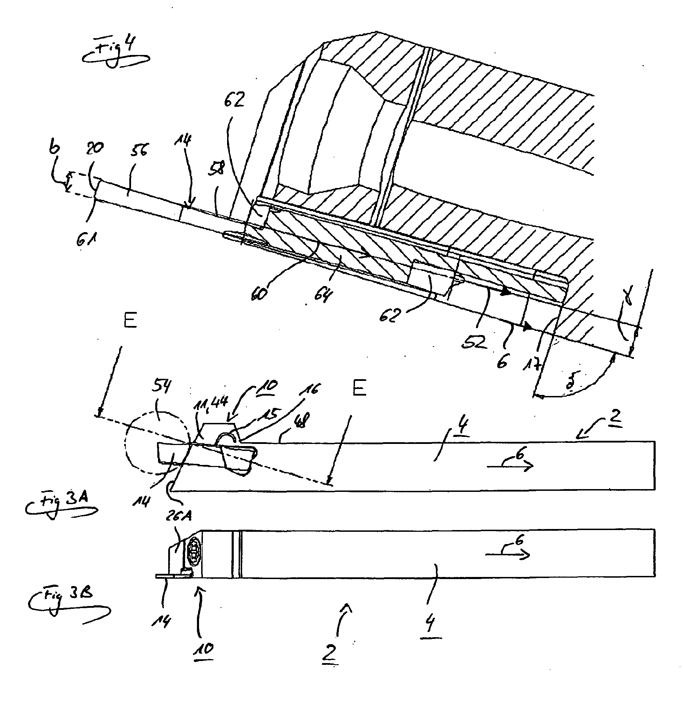

Fig. 1) auf, in die dieser in der montierten Stellung formschlüssig eingreift. Die Klemmpratze 11 ist durch Einarbeitung eines Trennschlitzes 15 in den Grundkörper 4 ausgebildet. Der Trennschlitz 15 trennt die Klemmpratze 11 bis auf einen verbleibenden Biegequerschnitt 16 vom restlichen Grundkörper 4 ab. Am rückseitigen Ende der Schneidkörperaufnahme 8 weist diese eine Anschlagfläche 17 auf, gegen die sich der Schneidkörper 14 in der montierten Stellung abstützt. Die Anschlagfläche 17 ist hierbei geneigt ausgebildet und zwar derart, dass der Schneidkörper 14 mit seiner rückseitigen Stirnseite flächig an der Anschlagfläche 17 zum Anliegen kommt, wie dies aus der Fig. 1 und Fig. 4 ersichtlich ist. In z-Richtung betrachtet schließen sich an die Anschlagfläche 17 jeweils einen Freiraum bildende Aussparungen 18 an. In diese Aussparungen 18 kommen die jeweiligen Eckbereiche des als zweiseitige Wendeschneidplatte ausgebildeten Schneidkörpers 14 in der montierten Endposition zum Liegen. Dadurch wird eine Beschädigung insbesondere der Schneiden 20 des Schneidkörpers 14 vermieden.

Die Schneidkörperaufnahme 8 ist zu einer Seitenfläche 22 des Grundkörpers offen ausgebildet und ist in diesem Bereich nicht von einer Wandung begrenzt.

Zum Befestigen des Schneidkörpers 14 wird dieser mit einem im Ausführungsbeispiel als Spannschraube 24 ausgebildeten Spannelement klemmend befestigt. Die Spannschraube 24 verläuft hierzu ausgehend von einem vorderen ersten Stimflächenabschnitt 26A schräg geneigt bezüglich der Halterlängsachse 6 in den Grundkörper 4 hinein. Im Bereich des Klemmkopfes 10 ist hierbei eine Senkaufnahme 28 ausgebildet, in der ein Kopf 30 der Spannschraube 24 in der montierten Stellung zum Einliegen kommt. Die Spannschraube 24 erstreckt sich entlang einer Mittenachse 32, zu der die Spannschraube rotationssymmetrisch ausgebildet ist. Parallel zu der Mittenachse 32, jedoch nicht deckungsgleich, verläuft eine Mittenlinie 34 der Senkaufnahme 28. Die Mittenlinie 34 und die Mittenachse 32 weisen daher einen Versatz zueinander auf, der insbesondere im Bereich zwischen 0,2 und 0,3 mm liegt.

Wie aus Fig. 4 zu entnehmen, verläuft der Trennschlitz 15 beginnend am unteren Bereich des ersten Stimflächenabschnitts 26A von der Stirnseite des Grundkörpers 4 her zunächst waagrecht verlaufend, um dann in etwa s-förmig gebogen sich in einen Kopfbereich 44 der Klemmpratze 11 zu erstrecken. Der Trennschlitz 15 weist hierbei einen Mittenabschnitt 46 auf, der im Wesentlichen senkrecht zu der Mittenachse 32 der Spannschraube 24 orientiert ist.

Der Kopfbereich 44 des Klemmkopfes 10 ist hierbei definiert durch eine wulstartige Erhebung gegenüber einer oberen Schaftfläche 48 des Grundkörpers 4. Im Ausführungsbeispiel ist diese Erhebung nach Art eines Trapezes ausgebildet. Von besonderer Bedeutung ist, dass der Trennschlitz 15 oberhalb dieser oberen Begrenzungsseite 48 und innerhalb des Kopfbereiches 44 endet. Insgesamt ist hierdurch ein sehr kurzer Kopfbereich 44 ermöglicht. Ein Gewinde 50, welches im Grundkörper 4 im Anschluss an den Trennschlitz 15 eingearbeitet ist, kann daher eine ausreichend große Länge aufweisen, so dass über die Spannschraube 24 große Kräfte auf die Klemmpratze 11 und damit auf den Schneidkörper 14 übertragen werden können.

Wie aus der Fig. 1 weiterhin zu entnehmen ist, erstreckt sich die Schneidkörperaufnahme 8 über den Kopfbereich 44 hinaus. Insgesamt ist daher die Schneidkörperlänge S größer als eine Auskraglänge A. Die Schneidkörperlänge S ist hierbei definiert durch die größte Ausdehnung des Schneidkörpers 8 in dessen Längserstreckung. Die Auskraglänge A ist definiert durch den Abstand zwischen dem Knickbereich, in dem der Kopfbereich 44 in die obere Schaftfläche 48 übergeht und der Position, in der sich die Schneide 20 in der eingebauten Position befindet.

Die Mittenachse 32 der Spannschraube 24 ist gegenüber der Halterlängsachse 6 um einen Spannwinkel α geneigt innerhalb der Vertikalebene angeordnet. Die Vertikalebene wird hierbei durch die x-z-Ebene festgelegt. Der Spannwinkel α beträgt im Ausführungsbeispiel etwa 25°. Korrespondierend hierzu ist der senkrecht zur Mittenachse 32 orientierte erste Stirnflächenabschnitt 26A unter einem Winkel α' bezüglich der Halterlängsachse 6 orientiert, wobei die Beziehung gilt: α' = 90° + α.

Durch diesen flachen Spannwinkel α verläuft die Spannschraube 24 sehr flach in den Grundkörper 4 hinein. Hierdurch ist der erste Stimflächenabschnitt 26A vergleichsweise steil angeordnet und bietet somit eine gute stirnseitige Zugänglichkeit der Spannschraube 24. Diese kann daher von der Stirnseite her problemlos und ohne weiteres betätigt werden. Dies ermöglicht einen einfachen und schnellen Austausch des Schneidkörpers 14 bei Bedarf, wenn dieser beispielsweise verschlissen ist. Es ist daher nicht erforderlich, dass der gesamte Werkzeughalter 2 aus einer maschinenseitigen Aufnahme ausgebaut wird. Dies würde nämlich einen erheblichen Aufwand bedeuten, da der Werkzeughalter 2 üblicherweise innerhalb des Maschinenhalters oder innerhalb einer Kassette hochgenau ausgerichtet ist. Insbesondere bei der Anordnung mehrerer Werkzeughalter 2 mit unterschiedlichen Werkzeugen neben und insbesondere übereinander ist durch den geringen Spannwinkel α eine einfache Austauschbarkeit und gute Zugänglichkeit erreicht.

Um eine sichere Klemmung und die Erreichung einer möglichst großen Klemmkraft auf den Schneidkörper 14 in Richtung auf die untere Auflagefläche 12 zu erreichen, sind mehrere Maßnahmen vorgesehen, die einzeln eingesetzt werden können, bevorzugt jedoch in Kombination miteinander zu einer besonders sicheren Klemmung führen. Dies ist zum einen der Versatz zwischen der Mittenachse 32 und der Mittenlinie 34 derart, dass die Mittenachse 32 in z-Richtung unterhalb der Mittenlinie 34 angeordnet ist. Durch diese außerkonzentrische Anordnung der beiden Linien 32,34 wird eine zusätzliche Kraftkomponente in Richtung auf die untere Auflagefläche 12 erzeugt, so dass die Klemmkraft hierdurch erhöht ist.

Um eine ausreichend hohe Klemmkraft zu erzeugen, ist weiterhin die Anordnung und Ausgestaltung des Trennschlitzes 15 von besonderer Bedeutung. Insbesondere wird hierdurch eine möglichst lange Gewindelänge des Gewindes 50 erreicht. Weiterhin ist eine vergleichsweise große Aufnahmelänge des Schneidkörpers 14 innerhalb des Grundkörpers 4 dadurch erreicht, dass sich die Schneidkörperaufnahme 8 bis über den Kopfbereich 44 hinaus erstreckt. Dies wird begünstigt u.a. dadurch, dass die Schneidkörperaufnahme 8, die sich entlang einer Längsachse 52 erstreckt, um einen Neigungswinkel β gegenüber der Halterlängsachse 6 geneigt ist. Die Längsachse 52 verläuft hierbei parallel sowohl zur unteren Auflagefläche 12 als auch zu der Unterseite der Klemmpratze 11. Der Neigungswinkel β liegt vorzugsweise im Bereich von 5°.

In der Seitendarstellung gemäß Fig. 3A ist beispielhaft ergänzend noch ein zu bearbeitendes Werkstück 54 dargestellt. Wie hieraus zu entnehmen ist, braucht die vordere Stirnseite des Werkzeughalters 2 keine besonderen Aussparungen, Vertiefungen, etc. aufzuweisen, um für das Werkstück 54 einen ausreichenden Bearbeitungsfreiraum bereitzustellen. Vielmehr ist es aufgrund der relativ steilen Ausrichtung der vorderen Stirnfläche entsprechend dem Winkel α' ausreichend, wenn diese vordere Stirnfläche als eine ebene Fläche ausgebildet ist.

Wie aus der Schnittbilddarstellung gemäß Fig. 4 zu erkennen ist, ist die Längsachse 52 der Schneidkörperaufnahme 8 unter dem Nebenfreiwinkel γ bezüglich der Halterlängsachse 6 orientiert, und zwar in Bezug auf die Vertikalebene, d.h. die Längsachse 52 ist bezogen auf die x-z-Ebene unter dem Nebenfreiwinkel γ angeordnet. Der Nebenfreiwinkel γ beträgt im Ausführungsbeispiel 1,5°. Dadurch, dass die Längsachse 52 der Schneidkörperaufnahme 8 nicht parallel zu der Halterlängsachse 6 verläuft, ist der Schneidkörper 14 in seiner montierten Endstellung schräg orientiert. Zusätzlich weist der Schneidkörper 14 an seinem vorderen Ende einen plattenförmigen Schneidbereich 56 auf, der sich von einer Schmalstelle 58 aus zur Schneide 20 hin erweitert. Hierdurch ist zusätzlich am Schneidkörper 14 ein Plattennebenfreiwinkel gebildet, der zwischen einer Plattenkörperlängsachse 60 und der Orientierung der Außenseite des Schneidbereichs 56 gebildet ist. In der montierten Position sind die Plattenkörperlängsachse 60 und die Längsachse 52 der Schneidkörperaufnahme 52 parallel zueinander ausgerichtet.

Der Nebenfreiwinkel γ, die Länge des Schneidkörpers 14 und die der Schneidkörperaufnahme 8 sind nunmehr derart bemessen, dass ein äußeres Schneideck 61 des Schneidkörpers 14 auf einer Linie mit der Seitenfläche 22 des Grundkörpers 4 liegt. Da über die Seitenfläche 22 üblicherweise die Null-Position des Werkzeughalters 2 in y-Richtung definiert wird, wird durch diese Maßnahme sichergestellt, dass auch das Schneideck 61 unmittelbar in dieser Null-Position positioniert ist.

Die hintere Anschlagfläche 17 ist bezüglich der Halterlängsachse 6 unter einem Winkel δ von 90° orientiert. Bezüglich der Längsachse 52 ist die Anschlagfläche 17 daher zusätzlich um den Betrag des Nebenfreiwinkels γ geneigt angeordnet. Die Anschlagfläche 17 ist also etwa unter einem Winkel von 91,5° gegenüber der Längsachse 52 geneigt. Hierdurch wird ein entsprechender Winkel der rückseitigen Stirnseite des Schneidkörpers 14 korrigiert. Wie aus Fig. 1 zu erkennen ist, liegt der Schneidkörper 14 lediglich mit einem mittleren Bereich der sich an die Schneide 20 anschließenden Stirnseite an der Anschlagfläche 17 an. Durch die durch den Winkel δ vorgenommene Korrektur ist eine möglichst flächige Anlage dieser Stirnseite an der Anschlagfläche 17 erreicht. Wegen des Nebenfreiwinkels γ ist die Schneide 20 nämlich ebenfalls unter einem dem Betrag des Nebenfreiwinkels entsprechenden Winkel zu der Längsachse 52 und damit zu der Plattenkörperlängsachse 60 orientiert. Durch diese Maßnahme wird erreicht, dass die Schneide 20 exakt senkrecht zu der Halterlängsachse 6 orientiert ist.

Damit ist bei einem Bearbeitungsvorgang, nämlich dem sogenannten Stechvorgang, erreicht, dass die über die Schneide 20 bearbeitete Werkstückoberfläche senkrecht zu der Zustellrichtung und damit der Halterlängsachse 6 orientiert ist. Die Länge der Schneide 20 definiert hierbei die sogenannte Stechbreite b. Diese ist ausgehende von dem Schneideck 61 prinzipiell bis zu der Dicke des Mittenbereichs 64 frei einstellbar. Durch die Bereitstellung von Schneidkörpem 14 mit unterschiedlicher Stechbreite b können also problemlos mit dem gleichen Werkzeughalter 2 unterschiedliche Stechbreiten b verwirklicht werden.

Das Schneideck 61 liegt vorzugsweise auf einer Linie mit der äußeren Randseite des Mittenbereichs 64. Durch den Nebenfreiwinkel γ ist ein ausreichender Freigang der Schneide 20 auf deren Außenseite erreicht. Auf der dem Schneideck 61 gegenüberliegenden inneren Seitenfläche 76 des Schneidbereichs 56 weist dieser einen Freiwinkel auf. Durch die Schrägstellung des Schneidkörpers 14 ist dieser als doppelter Freiwinkel ausgebildet, um die Schrägstellung zu kompensieren.

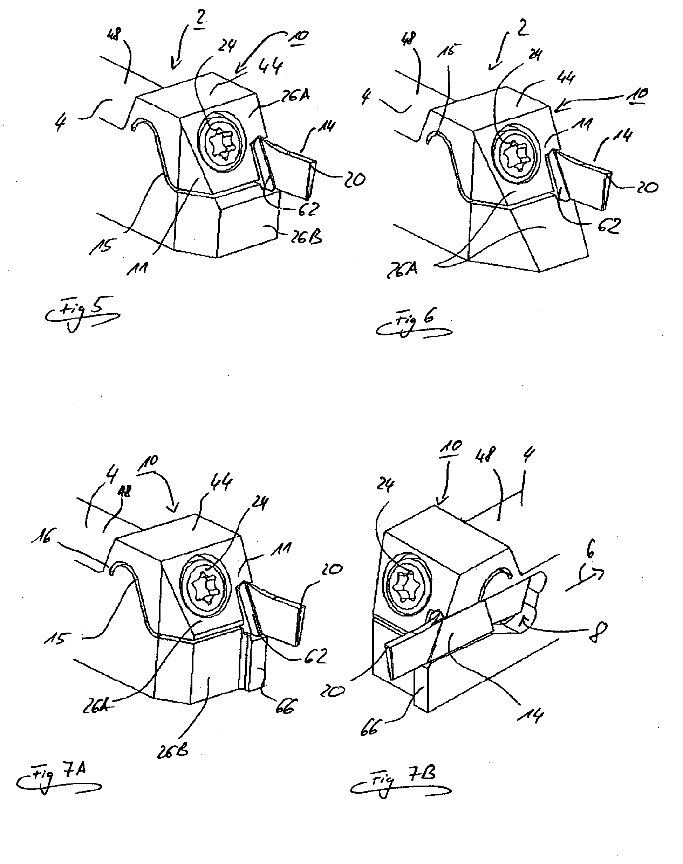

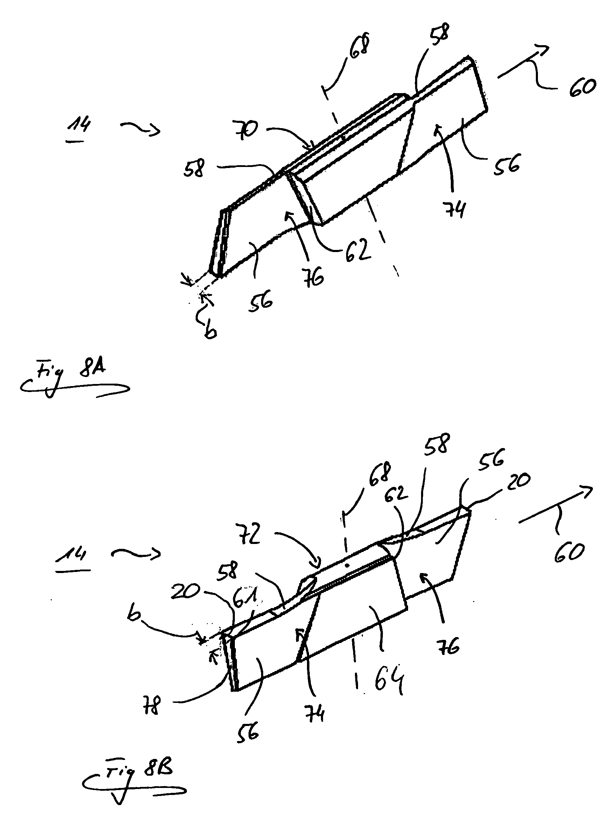

In den Fig. 5, 6 und 7A, 7B sind drei unterschiedliche Ausführungsvarianten des Werkzeughalters 2 dargestellt. Bei der Ausführungsvariante gemäß Fig. 5 schließt sich an den oberen ersten Stimflächenabschnitt 26A ein zweiter, unterer Stirnflächenabschnitt 26B an, der etwa senkrecht zu der Halterlängsachse 6 orientiert ist. Der Trennschlitz 15 ist hierbei im unteren Fünftel des oberen ersten Stimflächenabschnitts 26A quer verlaufend angeordnet. Eine Stirnwand 62 eines verdickten Mittenbereichs 64 des Schneidkörpers 14 (zum verdickten Mittenbereich 64 vgl. insbesondere die Fig. 8A,8B sowie Fig. 4) ist hierbei fluchtend mit dem ersten Stimflächenabschnitt 26A angeordnet.

Bei der Ausführungsvariante gemäß Fig. 6 ist lediglich ein durchgehender Stimflächenabschnitt 26A vorgesehen, der etwa in seiner Mitte durch den Trennschlitz 15 unterteilt ist. Bei der Ausführungsvariante gemäß den Fig. 7A,7B ist wiederum ein zweiter, etwa vertikal ausgerichteter unterer Stimflächenabschnitt 26B vorgesehen. Der Trennschlitz 15 ist in dieser Ausführungsvariante unterhalb des ersten Stimflächenabschnitts 26A angeordnet. Bei dieser Ausführungsvariante ist die Gefahr gering, dass abgetragene Späne sich im Trennschlitz 15 verklemmen, da aufgrund der vertikalen Ausrichtung des zweiten Stimflächenabschnitts 26B ein vergrößerter Freiraum zur Verfügung steht. Gleichzeitig ist unterhalb des Schneidkörpers 14 ein Stützsteg 66 herausgezogen, welcher den Schneidkörper 14 in seinem Mittenbereich 64 zusätzlich stützt.

Bei den in den Fig. 2, 5 bis 7 dargestellten Ausführungsbeispielen verläuft der Trennschlitz 15 jeweils in den Kopfbereich 44 hinein, weist dort an einem höchsten Punkt einen Wendepunkt auf, um anschließend wieder gebogen nach unten zu verlaufen. Der Trennschlitz 15 ist daher in seinem oberen und mittleren Bereich nach Art eines Spazierstockes ausgebildet. Durch diese Maßnahme wird der Mittenabschnitt 46 möglichst weit in Richtung zur vorderen Stirnseite verschoben. Gleichzeitig wird der Trennschlitz 15 bis nahe an den Knickbereich zwischen dem Kopfbereich 44 und der oberen Schaftfläche 48 gezogen, so dass sich ein besonders günstiger verbleibender Biegequerschnitt 16 ergibt.

In den Fig. 8A, 8B ist ein für den Einsatz in den beschriebenen Werkzeughalter 2 vorgesehener Schneidkörper 14 schematisch dargestellt. Fig. 8A zeigt hierbei die Unterseite 70 des Schneidkörpers 14, die im montierten Zustand gegen die untere Auflagefläche 12 verspannt wird. Umgekehrt zeigt Fig. 8B die Oberseite 72 des Schneidkörpers 14, gegen die die Unterseite der Klemmpratze 11 gespannt wird. Sowohl die Unterseite 70 als auch die Oberseite 72 weisen eine in etwa dachförmige Erhebung auf, die formschlüssig in die untere Auflagefläche 12 bzw. in die Unterseite der Klemmpratze 11 eingreift.

Der Schneidkörper 14 ist insgesamt nach Art einer doppelseitigen Wendeschneidplatte ausgebildet, die bezüglich einer Mittenrotationsachse 68 um 180° rotationssymmetrisch ausgebildet ist. Der Schneidkörper 14 ist insgesamt in etwa in drei Bereiche untergliedert. Dies sind der verdickte Mittenbereich 64, an den sich beidseitig jeweils der plattenförmige Schneidbereich 56 anschließt. Unmittelbar im Übergangsbereich zwischen dem verdickten Mittenbereich 64 und dem Schneidbereich 56 ist die engste Schmalstelle 58 des Schneidkörpers 14 ausgebildet. Von hier aus verbreitert sich der Schneidbereich 56 kontinuierlich zu der vorderen Schneide 20.

Ausgehend von der Schneide 20, die an der Oberseite 72 ausgebildet ist, verjüngt sich der Schneidbereich 56 nach unten zur Unterseite 70 hin. Zugleich ist auch ausgehend von dem verdickten Mittenbereich 64 die Oberseite 72 zum Schneidbereich 56 hin abgeschrägt, so dass das Teilstück der Oberseite 72 im Schneidbereich 56 in z-Richtung etwas unterhalb des Teilstücks der Oberseite 72 im verdickten Mittenbereich 64 angeordnet ist.

Während der Schneidkörper 14 an seiner äußeren Seitenfläche 74 im Übergangsbereich zwischen dem Mittenbereich 64 und dem Schneidbereich 56 lediglich eine Kante und einen geringen Rücksprung aufweist, ist an seiner inneren Seitenfläche 76 in diesem Übergangsbereich die Stirnwand 62 angeordnet, die schräg zur Plattenlängsachse 60 orientiert ist.

Von der Oberseite 72 aus gesehen liegt das Schneideck 61 auf einer geradlinigen Verlängerung der Außenseite des Mittenbereichs 64. Das Schneideck 61 fluchtet daher mit der Außenseite des Mittenbereichs 64, liegt also mit dieser Außenseite in der gleichen Ebene. Ausgehend von der Schneide 20 erstreckt sich nach unten eine Stirnseite 78, die zur Schneide 20 einen Freiwinkel einschließt. Die Stirnseite 78 ist trapezförmig, so dass sich insgesamt der Schneidbereich 56 nach unten zu verjüngt. Hierdurch wird zum Mittenbereich 64 hin im unteren Bereich der bereits erwähnte Rücksprung ausgebildet. An der oberen Kante ist dieser Rücksprung null, da das Schneideck 61 mit der Außenseite des Mittenbereichs 64 fluchtet. Gleichzeitig ist die Stirnseite 78 gegenüber der Mittenrotationsachse 68 geneigt.

## Patentansprüche

1. Werkzeughalter (2), insbesondere für ein Stechwerkzeug, mit einem sich entlang einer Halterlängsachse (6) in x-Richtung erstreckenden Grundkörper (4), dessen Breite sich in γ-Richtung und dessen Höhe sich in z-Richtung erstreckt und der stirnendseitig einen Klemmkopf (10) zur Aufnahme eines Schneidkörpers (14) aufweist, wobei der Klemmkopf (10) einen von einer Klemmpratze (11) und einer unteren Auflagefläche (12) begrenzte Schneidkörperaufnahme (8) aufweist, wobei ein Trennschlitz (15) zwischen der Klemmpratze (11) und der Auflagefläche (12) verläuft und die Klemmpratze (11) mit Hilfe eines zur Halterlängsachse (6) geneigten und sich über den Trennschlitz (15) erstreckenden Spannelements (24) in Richtung auf die untere Auflagefläche (12) verspannbar ist,
**dadurch gekennzeichnet,**
**dass** eine Mittenachse (32) des Spannelements (24) zur Halterlängsachse (6) einen Spannwinkel (α)< 45° und insbesondere <30° einschließt.

2. Werkzeughalter (2) nach Anspruch 1,
**dadurch gekennzeichnet,**
**dass** die Klemmpratze (11) eine Senkaufnahme (28) zur Aufnahme eines Kopfes (30) des Spannelements (24) aufweist, die sich entlang einer Mittenlinie (34) erstreckt, wobei die Mittenachse (32) des Spannelements (24) zur Mittenlinie (34) der Senkaufnahme (28) in Richtung auf die untere Auflagefläche (12) versetzt angeordnet ist.

3. Werkzeughalter (2) nach Anspruch 1 oder 2,
**dadurch gekennzeichnet,**
**dass** eine neben der Schneidkörperaufnahme (8) verlaufende Stirnfläche des Grundkörpers durch maximal zwei ebene Stirnflächenabschnitte (26A,B) gebildet ist.

4. Werkzeughalter (2) nach einem der vorhergehenden Ansprüche,
**dadurch gekennzeichnet,**
**dass** die Klemmpratze (11) vom Grundkörper (4) bis auf einen Biegequerschnitt (16) durch einen Trennschlitz (15) getrennt ist und dass der Grundkörper (4) im Bereich des Spannelements (24) einen bezüglich der Halterlängsachse (6) geneigten Stirnflächenabschnitt (26A) aufweist, der sich bis zum Trennschlitz (15) kantenfrei erstreckt.

5. Werkzeughalter (2) nach einem der vorhergehenden Ansprüche,
**dadurch gekennzeichnet,**
**dass** die Klemmpratze (11) vom Grundkörper (4) bis auf einen Biegequerschnitt (16) durch den Trennschlitz (15) getrennt ist, wobei der Biegequerschnitt (16) innerhalb des Klemmkopfes (10) liegt, dessen Erstreckung in Richtung der Halterlängsachse (6) bestimmt ist durch einen Kopfbereich (44), der gegenüber einer oberen Schaftfläche (48) des Grundkörpers (4) erhöht ist.

6. Werkzeughalter (2) nach Anspruch 5,
**dadurch gekennzeichnet,**
**dass** die Schneidkörperaufnahme (8) in Richtung der Halterlängsachse (6) sich über den Kopfbereich (44) hinaus erstreckt.

7. Werkzeughalter (2) nach Anspruch 5 oder 6,
**dadurch gekennzeichnet,**
**dass** der Trennschlitz (15) im erhöhten Kopfbereich (44) endet.

8. Werkzeughalter (2) nach einem der Ansprüche 4 bis 7,
**dadurch gekennzeichnet,**
**dass** der Trennschlitz (15) s-förmig verläuft und in einem Mittenabschnitt (46) etwa senkrecht zur Mittenachse (32) des Spannelements (24) orientiert ist.

9. Werkzeughalter (2) nach einem der vorhergehenden Ansprüche mit einen in der Schneidkörperaufnahme (8) einliegenden Schneidkörper (14)

10. Werkzeughalter (2) nach Anspruch 9, wobei der Schneidkörper (14) sich entlang einer Plattenlängsachse (60) erstreckt und einen plattenförmigen Schneidbereich (56) mit einer stirnseitigen Schneide (20) aufweist, und der Schneidbereich (56) sich in Richtung der Plattenlängsachse (60) von einer Schmalstelle (58) zur Schneide (20) hin verbreitert.

11. Werkzeughalter (2) nach Anspruch 9 oder 10, wobei der Schneidkörper (14) bezüglich einer Mittenrotationsachse (68) um 180° rotationssymmetrisch ist.

12. Werkzeughalter (2) nach Anspruch 11, wobei der Schneidkörper (14) einen verdickten Mittenbereich (64) aufweist, an den sich beidseitig und diagonal gegenüberliegend jeweils der plattenförmige Schneidbereich (56) anschließt.

13. Werkzeughalter (2) nach Anspruch 11, wobei bei dem Schneidkörper (14) sich fluchtend an den Mittelbereich (64) eine äußere Seitenfläche (74) des Schneidbereichs (56) anschließt, die sich bis zu einem äußeren Schneideck (61) erstreckt, so dass dieses zum Mittenbereich (64) fluchtend orientiert ist.

14. Werkzeughalter (2) nach Anspruch 13, wobei bei dem Schneidkörper (14) die Länge der Schneide (20) eine Stechbreite (b) definiert, die ausgehend vom Schneideck (61) bis zu einer der Dicke des Mittenbereichs (64) entsprechenden maximalen Stechbreite (b) einstellbar ist.

15. Werkzeughalter (2) nach einem der Ansprüche 12 bis 14, wobei bei dem Schneidkörper (14) der Mittenbereich (64) am Übergang zum jeweiligen plattenförmigen Schneidbereich (56) eine gegenüber der Plattenlängsachse (60) geneigte Stirnwand (62) aufweist.

## Claims

1. Tool holder (2), in particular for a grooving tool, having a parent body (4) which extends along a holder longitudinal axis (6) in the x direction and the width of which extends in the y direction and the height of which extends in the z direction and which has at the front end a clamping head (10) for accommodating a cutting body (14), wherein the clamping head (10) has a cutting body receptacle (8) defined by a clamping claw (11) and a bottom bearing surface (12), wherein a separating slot (15) runs between the clamping claw (11) and the bearing surface (12), and the clamping claw (11) can be tightened in the direction of the bottom bearing surface (12) by means of a tightening element (24) inclined relative to the holder longitudinal axis (6) and extending over the separating slot (15), **characterized in that** a centre axis (32) of the tightening element (24) encloses a tightening angle (α) < 45° and in particular < 30° relative to the holder longitudinal axis (6).

2. Tool holder (2) according to Claim 1, **characterized in that** the clamping claw (11) has a countersunk receptacle (28) for accommodating a head (30) of the tightening element (24), said countersunk receptacle (28) extending along a centre line (34), the centre axis (32) of the tightening element (24) being arranged offset from the centre line (34) of the countersunk receptacle (28) in the direction of the bottom bearing surface (12).

3. Tool holder (2) according to Claim 1 or 2, **characterized in that** an end face, running next to the cutting body receptacle (8), of the parent body is formed by at most two flat end face sections (26A, B).

4. Tool holder (2) according to one of the preceding claims, **characterized in that** the clamping claw (11) is separated from the parent body (4) by a separating slot (15) except for a bending cross section (16), and **in that** the parent body (4) has in the region of the tightening element (24) an end face section (26A) which is inclined relative to the holder longitudinal axis (6) and which extends free of edges up to the separating slot (15).

5. Tool holder (2) according to one of the preceding claims, **characterized in that** the clamping claw (11) is separated from the parent body (4) by the separating slot (15) except for a bending cross section (16), the bending cross section (16) lying within the clamping head (10), the extent of said bending cross section (16) in the direction of the holder longitudinal axis (6) being determined by a head region (44) which is raised relative to a top shank surface (48) of the parent body (4).

6. Tool holder (2) according to Claim 5, **characterized in that** the cutting body receptacle (8) extends in the direction of the holder longitudinal axis (6) beyond the head region (44).

7. Tool holder (2) according to Claim 5 or 6, **characterized in that** the separating slot (15) ends in the raised head region (44).

8. Tool holder (2) according to one of Claims 4 to 7, **characterized in that** the separating slot (15) runs in an S shape and is oriented in a central section (46) approximately perpendicularly to the centre axis (32) of the tightening element (24).

9. Tool holder (2) according to one of the preceding claims, having a cutting body (14) resting in the cutting body receptacle (8).

10. Tool holder (2) according to Claim 9, wherein the cutting body (14) extends along an insert longitudinal axis (60) and has a plate-shaped cutting region (56) having a cutting edge (20) at the front end, and the cutting region (56) widens in the direction of the insert longitudinal axis (60) from a narrow point (58) towards the cutting edge (20).

11. Tool holder (2) according to Claim 9 or 10, wherein the cutting body (14) is rotationally symmetrical about 180° relative to a centre rotation axis (68).

12. Tool holder (2) according to Claim 11, wherein the cutting body (14) has a thickened central region (64), the plate-shaped cutting region (56) adjoining each side of said thickened central region (56) in a diagonally opposite manner.

13. Tool holder (2) according to Claim 11, wherein, at the cutting body (14), an outer side face (74) of the cutting region (56) adjoins the central region (64) in an aligned manner, said side face (74) extending up to an outer cutting corner (61), such that the latter is oriented in alignment with the central region (64).

14. Tool holder (2) according to Claim 13, wherein, at the cutting body (14), the length of the cutting edge (20) defines a grooving width (b) which, starting from the cutting corner (61), can be set up to a maximum grooving width (b) corresponding to the thickness of the central region (64).

15. Tool holder (2) according to one of Claims 12 to 14, wherein, at the cutting body (14), the central region (64) has at the transition to the respective plate-shaped cutting region (56) an end wall (62) inclined relative to the insert longitudinal axis (60).

## Revendications

1. Porte-outil (2), notamment pour un outil de tronçonnage, comprenant un corps de base (4) s'étendant le long d'un axe longitudinal du porte-outil (6) dans la direction x, dont la largeur s'étend dans la direction y et dont la hauteur s'étendant dans la direction z et qui présente du côté de l'extrémité frontale une tête de serrage (10) pour recevoir un corps coupant (14), la tête de serrage (10) présentant un logement de corps coupant (8) limité par une griffe de serrage (11) et une surface d'appui inférieure (12), une fente de séparation (15) s'étendant entre la griffe de serrage (11) et la surface d'appui (12) et la griffe de serrage (11) pouvant être serrée dans la direction de la surface d'appui inférieure (12) à l'aide d'un élément de serrage (24) incliné par rapport à l'axe longitudinal du porte-outil (6) et s'étendant sur la fente de séparation (15),
**caractérisé en ce**
**qu'**un axe médian (32) de l'élément de serrage (24) forme par rapport à l'axe longitudinal du porte-outil (6) un angle de serrage (α) < 45° et notamment < 30°.

2. Porte-outil (2) selon la revendication 1, **caractérisé en ce que**
la griffe de serrage (11) présente un logement renfoncé (28) pour recevoir une tête (30) de l'élément de serrage (24), qui s'étend le long d'une ligne médiane (34), l'axe médian (32) de l'élément de serrage (24) étant disposé de manière décalée par rapport à la ligne médiane (34) du logement renfoncé (28) dans la direction de la surface d'appui inférieure (12).

3. Porte-outil (2) selon la revendication 1 ou 2, **caractérisé en ce**
**qu'**une surface frontale du corps de base s'étendant à côté du logement de corps coupant (8) est formée par au maximum deux portions de surface frontale planes (26A,B).

4. Porte-outil (2) selon l'une quelconque des revendications précédentes,
**caractérisé en ce que**
la griffe de serrage (11) est séparée du corps de base (4) par une fente de séparation (15) à l'exception d'une section transversale de courbure (16), et **en ce que** le corps de base (4) présente dans la région de l'élément de serrage (24) une portion de surface frontale (26A) inclinée par rapport à l'axe longitudinal du porte-outil (6), qui s'étend sans arête jusqu'à la fente de séparation (15).

5. Porte-outil (2) selon l'une quelconque des revendications précédentes,
**caractérisé en ce que**
la griffe de serrage (11) est séparée du corps de base (4) par la fente de séparation (15) à l'exception d'une section transversale de courbure (16), la section transversale de courbure (16) se situant à l'intérieur de la tête de serrage (10), son étendue dans la direction de l'axe longitudinal du porte-outil (6) étant définie par une région de tête (44) qui est rehaussée par rapport à une surface d'arbre supérieure (48) du corps de base (4).

6. Porte-outil (2) selon la revendication 5, **caractérisé en ce que**
le logement du corps coupant (8) s'étend dans la direction de l'axe longitudinal du porte-outil (6) au-delà de la région de tête (44).

7. Porte-outil (2) selon la revendication 5 ou 6, **caractérisé en ce que**
la fente de séparation (15) se termine dans la région de tête rehaussée (44).

8. Porte-outil (2) selon l'une quelconque des revendications 4 à 7,
**caractérisé en ce que**
la fente de séparation (15) s'étend en forme de s et est orientée dans une portion centrale (46) approximativement perpendiculairement à l'axe médian (32) de l'élément de serrage (24).

9. Porte-outil (2) selon l'une quelconque des revendications précédentes, comprenant un corps coupant (14) introduit dans le logement de corps coupant (8).

10. Porte-outil (2) selon la revendication 9, le corps coupant (14) s'étendant le long d'un axe longitudinal de plaque (60) et présentant une région de coupe en forme de plaque (56) avec une arête de coupe du côté frontal (20), et la région de coupe (56) s'élargissant dans la direction de l'axe longitudinal de plaque (60) depuis un point étroit (58) jusqu'à l'arête de coupe (20).

11. Porte-outil (2) selon la revendication 9 ou 10, dans lequel le corps de coupe (14) est symétrique suivant 180° par rapport à un axe de rotation médian (68).

12. Porte-outil (2) selon la revendication 11, dans lequel le corps de coupe (14) présente une région centrale épaissie (64), à laquelle se raccorde, de part et d'autre et en regard diagonalement, à chaque fois la région de coupe en forme de plaque (56).

13. Porte-outil (2) selon la revendication 11, dans lequel, dans le corps coupant (14), une surface latérale extérieure (74) de la région de coupe (56) se raccorde en affleurement à la région centrale (64), laquelle s'étend jusqu'à un coin de coupe extérieur (61) de sorte que celui-ci soit orienté en affleurement vers la région centrale (64).

14. Porte-outil (2) selon la revendication 13, dans lequel, dans le corps coupant (14), la longueur de l'arête de coupe (20) définit une largeur de tronçonnage (b), qui est ajustable depuis le coin de coupe (61) jusqu'à une largeur de tronçonnage (b) maximale correspondant à l'épaisseur de la région centrale (64).

15. Porte-outil (2) selon l'une quelconque des revendications 12 à 14, dans lequel, dans le corps coupant (14), la région centrale (64) présente, au niveau de la transition à la région de coupe respective en forme de plaque (56), une paroi frontale (62) inclinée par rapport à l'axe longitudinal de plaque (60).
